# EUROPÄISCHE PATENTSCHRIFT

(11) **EP 2 297 830 B1**
(45) Veröffentlichungstag und Bekanntmachung des Hinweises auf die Patenterteilung: **13.12.2017**
(21) Anmeldenummer: 09779964.7
(22) Anmeldetag: 26.06.2009
(51) Int. Cl.: H02H 7/26, B63G 8/08

(54) **SCHNELLSCHALTEINRICHTUNG FÜR EINE HOCHLEISTUNGS-BATTERIE IN EINEM GLEICHSTROMINSELNETZ**
HIGH-SPEED CIRCUIT BREAKER FOR A HIGH-PERFORMANCE BATTERY IN AN ISOLATED DIRECT CURRENT NETWORK
DISJONCTEUR RAPIDE POUR UNE BATTERIE HAUTE PUISSANCE DANS UN RÉSEAU AUTONOME DE COURANT CONTINU

(30) Priorität: 09.07.2008 DE 102008032222; 24.10.2008 DE 102008053074
(43) Veröffentlichungstag der Anmeldung: 23.03.2011
(73) Patentinhaber: Siemens Aktiengesellschaft, 80333 München (DE)
(72) Erfinder: AHLF, Gerd, 91369 Wiesenthau (DE); RISIUS, Oskar, 91056 Erlangen (DE); SCHULDT, Andreas, 91350 Gremsdorf (DE); TÖLLE, Hans-Jürgen, 90419 Nürnberg (DE); MARX, Walter, 90427 Nürnberg (DE)
(86) Internationale Anmeldenummer: PCT/EP2009/058032
(87) Internationale Veröffentlichungsnummer: WO 2010/003835

(56) Entgegenhaltungen:
- EP-A- 1 918 192
- WO-A-2008/055493

## Beschreibung

Die Erfindung betrifft eine Schnellschalteinrichtung für eine Hochleistungs-Batterie in einem Gleichstrominselnetz, insbesondere einem U-Boot-Gleichstromnetz, gemäß Patentanspruch 1 bzw. Patentanspruch 4. Die Erfindung betrifft ferner ein Gleichstrominselnetz gemäß Patentanspruch 14.

Derzeit sich in der Entwicklung befindliche Hochleistungs-Batterien wie z.B. Li-Ionen-Batteriezellen, Li-Polymer-Zellen, Li-Eisen-Phosphat-Batteriezellen, Li-Titanat-Batteriezellen und Kombinationen davon zeichnen sich im Vergleich zu konventionellen Batterien wie z.B. Bleibatterien durch eine erhebliche Verkürzung der Lade- und Entladezeiten und eine erhebliche Erhöhung des Kurzzeit-Entladestromes aus. Auf der anderen Seite werden als problematisch für ihren Einsatz in einem als Großanlage ausgebildeten Gleichstrominselnetz wie z.B. in einer Eigenstromversorgung eines Kraftwerkes oder in einem U-Boot-Gleichstromnetz die außerordentlich hohen prospektiven Kurzschlussströmen gesehen, die beispielsweise 20 kA für einen Batteriestrang und bis zu 500 kA pro Batterie betragen können.

Für das Schalten der Betriebsströme und die Begrenzung der Kurzschlussströme weist eine Batterieanlage in einem Gleichstrominselnetz üblicherweise eine Schalteinrichtung auf. Ein Gleichstromnetz mit einer Hochleistungs-Batterie mit einer derartigen Schalteinrichtung ist beispielsweise in der EP 1 641 066 A2 und der WO 2008/055493 A1 offenbart.

Eine Hochleistungsbatterie in einem Gleichstrominselnetz umfasst hierbei üblicherweise mehrere parallel geschaltete Batteriemodule mit jeweils einem Strang oder mehreren parallel geschalteten Strängen von in Reihe geschalteten Hochleistungs-Batteriezellen, wobei der bzw. jeder der Stränge die Netzspannung des Gleichstrominselnetzes hat.

Ausgehend hiervon ist es Aufgabe vorliegender Erfindung, eine Schalteinrichtung für eine Hochleistungs-Batterie in einem Gleichstrominselnetz, insbesondere einem U-Boot-Gleichstromnetz, anzugeben, mit der Entladeströme der Hochleistungs-Batterie besonders schnell abgeschaltet werden.

Die Lösung dieser Aufgabe gelingt erfindungsgemäß zum einen durch eine Schnellschalteinrichtung mit den Merkmalen des Patentanspruchs 1 und zum anderen durch eine Schnellschalteinrichtung mit den Merkmalen des Patentanspruchs 4. Ein Gleichstrominselnetz mit einer Schnellschalteinrichtung ist Gegenstand des Patentanspruchs 14. Vorteilhafte Ausgestaltungen sind jeweils Gegenstand der Unteransprüche.

Bei der Schnellschalteinrichtung gemäß Patentanspruch 1 fließt beim Ladebetrieb des Batteriemoduls der Ladestrom über die Diode in die Batterie und beim Entladebetrieb des Batteriemoduls der Entladestrom über den Halbleiterschalter. Durch eine entsprechende Ansteuerung des Halbleiterschalters durch die Überwachungs- und Steuervorrichtung kann der Entladestrom in einer im Vergleich zu einem konventionellen Leistungsschalter wesentlich kürzeren Zeit unterbrochen werden.

Gemäß einer besonders vorteilhaften Ausgestaltung ist die Überwachungs- und Steuereinrichtung derart ausgebildet, dass sie einen Kurzschlussstrom in dem Anschlussleiter schnell erfasst und durch Schalten des Leistungshalbleiterschalters in einen nichtleitenden Zustand den Kurzschlussstrom unterbricht. Durch die Schnellschalteinrichtung kann der Entladestrom in einer im Vergleich zu einem konventionellen Leistungsschalter wesentlich kürzeren Zeit unterbrochen und dabei der Kurzschlussstrom des einzelnen Batteriemoduls und in der Folge auch der Summenkurzschlussstrom sämtlicher Batteriemodule der Batterie auf derart unkritische Werte begrenzt werden, so dass auf weitere Strombegrenzungs- und Abschaltmittelmittel für die Summenkurzschlussströme verzichtet werden kann.

Zur Unterbindung von Schaltüberspannungen an dem Leistungshalbleiter ist bevorzugt parallel zu der Parallelschaltung eine Diode geschaltet, die in einem Leiterpfad angeordnet ist, der einen mit dem Pluspol des Batteriemoduls verbundenen Anschlussleiter und einen mit dem Minuspol des Batteriemoduls verbundenen Anschlussleiter verbindet.

Bei der Schnellschalteinrichtung gemäß Patentanspruch 4 fließt beim Ladebetrieb des Batteriemoduls der Ladestrom über den mechanischen Schalter. Auch beim Entladebetrieb des Batteriemoduls fließ der gesamte oder zumindest ein Teil des Entladestrom über den mechanischen Schalter. Erst zum Abschalten des Entladestromes wird durch Öffnen des mechanischen Schalters der Entladestrom vollständig auf den Halbleiterschalter kommutiert und dann durch den Halbleiterschalter abgeschaltet. Der Strom wird somit im Normalbetrieb im Wesentlichen über den mechanischen Schalter geführt. Hierdurch können Verluste vermieden werden, da ein mechanischer Schalter im Vergleich zu einem Halbleiterbauelement wesentlich geringere Verluste aufweist. Die Zeit zwischen dem Öffnen des mechanischen Schalters und dem Abschalten des Halbleiterschalters kann hierbei derart gewählt werden, dass beim Abschalten des Halbleiterschalters der Abstand zwischen den Kontakten des mechanischen Schalters so groß ist, dass sich der Lichtbogen zwischen den Kontakten bereits derart reduziert hat, dass sich bei Abschalten des Halbleiterschalters kein neuer Lichtbogen zwischen den Kontakten aufbaut.

Gemäß einer besonders vorteilhaften Ausgestaltung ist die Überwachungs- und Steuereinrichtung derart ausgebildet, dass sie einen Kurzschlussstrom in dem Anschlussleiter schnell erfasst und durch Schalten des Leistungshalbleiterschalters in einen nichtleitenden Zustand den Kurzschlussstrom unterbricht. Durch die Schnellschalteinrichtung kann der Entladestrom somit in einer im Vergleich zu einem konventionellen Leistungsschalter wesentlich kürzeren Zeit unterbrochen und dabei der Kurzschlussstrom des einzelnen Batteriemoduls und in der Folge auch der Summenkurzschlussstrom sämtlicher Batteriemodule der Batterie auf derart unkritische Werte begrenzt werden, dass auf weitere Strombegrenzungs- und Abschaltmittelmittel für die Summenkurzschlussströme verzichtet werden kann.

Der Halbleiterschalter kann dabei beim Öffnen des mechanischen Schalters bereits in einem leitenden Zustand sein, d.h. bei normalem Entladebetrieb fließt sowohl ein Strom über den mechanischen Schalter als auch über den Halbleiterschalter.

Bevorzugt ist der Halbleiterschalter jedoch beim Öffnen des mechanischen Schalters in einem nichtleitenden Zustand und die Überwachungs- und Steuereinrichtung ist derart ausgebildet , dass sie den Halbleiterschalter mit dem Öffnen des mechanischen Schalters in einen leitenden Zustand schaltet. Ein Stromfluss über den Halbleiterschalter findet somit nur zum Abschalten des Entladestromes statt, wodurch Verluste minimiert werden können.

Bevorzugt ist der mechanische Schalter als ein Vakuumschalter ausgebildet.

Ein schnelles Öffnen der Kontakte des mechanischen Schalters ist beispielsweise dadurch möglich, dass die Kraft für die Öffnung der Kontakte durch einen elektrodynamischen Antrieb erzeugt wird, der nach dem Prinzip des Thomson-Effektes arbeitet.

Zur Aufnahme von elektrischer Energie und zur Begrenzung von Überspannungen, die nach der Schaltung des Halbleiterschalters in den nichtleitenden Zustand an dem Halbleiterschalter auftreten, ist bevorzugt ein elektrischer Widerstand, vorzugsweise ein Varistor, parallel zu dem Halbleiterschalter geschaltet.

Sowohl bei der Lösung gemäß Anspruch 1 als auch bei der Lösung gemäß Anspruch 4 können als Leistungshalbleiterschalter beispielsweise GTOs, IGBTs oder IGCTs zur Anwendung kommen. Hierbei können Abschaltzeiten für Kurzschlussströme von weniger als 10 Mikrosekunden erzielt werden, während mit konventionellen Schnellschaltern nur ca. 3 bis 5 ms möglich sind. Hierdurch können die Summenkurzschlussströme auf ungefährliche Werte begrenzt werden, was mit herkömmlichen Schutz- und Schaltorganen in manchen Gleichstrominselnetzen, insbesondere in U-Boot-Gleichstromnetzen, mit herkömmlich verfügbaren Schalt- und Schutzorganen (z.B. Kompaktschaltern) als Schalter für die einzelnen Stränge gar nicht möglich wäre, denn die Summenkurzschlussströme pro Batterie wären dann noch so hoch, dass zusätzliche Strombegrenzungen / Abschaltung erforderlich wären. Der Durchlassstrom dieser herkömmlichen Strombegrenzung / Abschaltung für den Summenkurzschlussstrom (z. B. Spezialsicherungen) liegt mit z. B. ca. 200 kA aber noch deutlich über den zulässigen Kurzschlussströmen der bisherigen Anlagen und den verfügbaren Schalt- und Schutzorganen. Mit einer erfindungsgemäßen Schalteinrichtung sind jedoch die Summenkurzschlussströme einer Batterie mit den herkömmlichen Schalt-und Schutzorganen beherrschbar.

Bevorzugt umfasst jedes der Batteriemodule nur jeweils einen einzigen Strang von in Reihe geschalteten Hochleistungsenergiespeicher-Batteriezellen, d.h. die Schalteinrichtung umfasst jeweils eine Schalteinheit für jeden einzelnen der Stränge. Hierdurch können im Kurzschlussfall die Summenkurzschlussströme der gesamten Batterie auf besonders niedrige Werte begrenzt und somit besonders sicher beherrscht werden.

Bevorzugt verbindet der Anschlussleiter mit der Schalteinheit den Pluspol des Batteriemoduls mit dem Gleichstromnetz verbindet, d.h. die Schalteinheit ist zwischen den Pluspol des Batteriemoduls und das Gleichstromnetz geschaltet.

Zur potentialfreien Abtrennung des Batteriemoduls von dem Gleichstromnetz kann in einem Anschlussleiter, der den Pluspol des Batteriemoduls mit dem Gleichstromnetz verbindet und in einem Anschlussleiter der den Minuspol des Batteriemoduls mit dem Gleichstromnetz verbindet, jeweils ein mechanischer Schalter, insbesondere ein Trennschalter, angeordnet sein. Hierbei kann es sich auch um einen einzigen Schalter mit mehreren Schaltkontaktpaaren handeln, wobei beispielsweise ein Kontaktpaar in den einen Anschlussleiter und das andere Kontaktpaar in den anderen Anschlussleiter geschaltet ist.

Die Batteriezellen bestehen von Vorteil aus Li-Ionen-Batteriezellen, Li-Polymerbatteriezellen, Li-Eisen-Phosphat-Batteriezellen, Li-Titanat-Batteriezellen oder Kombinationen daraus.

Bei einem Einsatz einer Schnellschalteinrichtung, z.B. einer vorstehend beschriebenen erfindungsgemäßen Schnellschalteinrichtung, in einem Gleichstrominselnetz, insbesondere einem U-Boot-Gleichstromnetz, mit zumindest einem elektrischen Verbraucher, einer vorstehend erläuterten Hochleistungs-Batterie zur Versorgung des elektrischen Verbrauchers mit elektrischer Energie und einem zwischen den elektrischen Verbraucher und die Hochleistungs-Batterie geschaltetes Schutzorgan für den Verbraucher, insbesondere eine Sicherung, können im Kurzschlussfall die Ströme der Batteriemodule abgeschaltet und auf Werte begrenzt werden, die als Summenkurzschlussströme von dem Gleichstrominselnetz sicher beherrscht werden können. Auch im Fehlerfall, z.B. bei Überlast, können die Batteriemodule sicher abgeschaltet werden.

Wenn die Schnellschalteinrichtung für jedes der Batteriemodule jeweils eine Schnellschalteinheit aufweist und im Falle eines Kurzschlusses am Verbraucher die Schnellschalteinheiten schneller als das nachgeschaltet Schutzorgan für den Verbraucher auslösen, dann würde ein Kurzschluss am Verbraucher zu keiner Auslösung des Schutzorgans führen. Es ist somit keine Selektivität zwischen den Schnellschalteinheiten und dem Schutzorgan gegeben. Da das Schutzorgan nicht auslöst, bliebe der Kurzschlussort unbekannt. Ein anschließendes Zuschalten der Batteriemodule würde wiederum zu einem Kurzschluss und somit zu einer Abschaltung der Batteriemodule führen. Insgesamt kann dies zu einem dauerhaften Black-Out des gesamten Gleichstrominselnetzes führen.

Beispielsweise kann unter den in U-Boot-Gleichstromnetzen herrschenden Bedingungen die Auslösezeit bei den erfindungsgemäßen Schnellschalteinheiten im Bereich von Mikrosekunden liegen, während sie im Fall der Schutzorgane, vor allem der Sicherungen, im Millisekunden-Bereich liegt.

Bei dem Gleichstrominselnetz gemäß Anspruch 14 ist deshalb zwischen zumindest eines der Batteriemodule und dem Schutzorgan gezielt keine Schnellschalteinheit geschaltet. Bei diesem zumindest einen Batteriemodul wird somit ein Kurzschlussstrom gezielt nicht abgeschaltet. Der bzw. die nicht abgeschalteten Kurzschlussströme führen dann zu einer Auslösung des nachgeschalteten Schutzorganes für den Verbraucher, im Falle einer Sicherung somit zu einem Schmelzen der Sicherung. Hierdurch wird der Verbraucher zuverlässig von dem Gleichstromnetz getrennt. Anschließend können die abgeschalteten Batteriemodule durch die Schnellschalteinheiten automatisch wieder dem Gleichstromnetz zugeschaltet werden.

Ein Stromfluss von einem Batteriemodule zu dem Verbraucher kann im Falle eines zwischengeschalteten Schnellschalteinheit zu einem Spannungsabfall an der Schnellschalteinheit führen. Dies hat zur Folge, dass Batteriemodule, die über eine zwischengeschaltete Schnellschalteinheit mit dem Verbraucher verbunden sind, und Batteriemodule, die ohne eine zwischengeschaltete Schnellschalteinheit mit dem Verbraucher verbunden sind, unterschiedlich entladen. Zur gleichmäßigen Entladung aller Batteriemodule ist deshalb in die elektrische Verbindung zwischen dem zumindest einen Batteriemodul und dem Schutzorgan, in die keine Schnellschalteinheit geschaltet ist, eine Kompensationseinheit zur Kompensation der Strom/Spannungs-Charakteristik einer Schnellschalteinheit geschaltet.

Bevorzugt weist die Kompensationseinheit 51 zumindest im Bereich der Betriebsspannungen- und ströme und dabei zumindest für die Entladeströme des Batteriemoduls 4a die gleiche Strom/Spannungs-Charakteristik wie eine Schnellschalteinheit auf.

In einer konstruktiv besonders einfachen Ausgestaltung umfasst die Kompensationseinheit eine Parallelschaltung aus einer den Ladestrom des Batteriemoduls durchlassend gepolten Diode und einer den Entladestrom durchlassend gepolten Diode.

Zur schnellen Wiederverfügbarkeit des Netzes nach einem Kurzschluss am Verbraucher können die Schnellschalteinheiten derart ausgebildet sein, dass sie nach einer Trennung der Batteriemodule von dem Gleichstromnetz aufgrund von Kurzschlussströmen die Spannung des Netzes erfassen und nach Spannungswiederkehr die Batteriemodule automatisch wieder dem Gleichstromnetz zuschalten.

Die Erfindung sowie vorteilhafte Ausgestaltungen der Erfindung werden im Folgenden anhand von Ausführungsbeispielen in den Figuren näher erläutert; darin zeigen:
- FIG 1: eine Prinzipdarstellung eines ersten Gleichstrominselnetzes,
- FIG 2: ein erstes Beispiel für den Aufbau eines in FIG 1 gezeigten Batteriemoduls,
- FIG 3: ein zweites Beispiel für den Aufbau eines in FIG 1 gezeigten Batteriemoduls
- FIG 4: ein Beispiel für den Aufbau einer in FIG 1 gezeigten Schalteinheit
- FIG 5: eine Prinzipdarstellung eines zweiten Gleichstrominselnetzes
- FIG 6: ein Beispiel für den Aufbau einer in FIG 1 gezeigten Schalteinheit
- FIG 7: eine Prinzipdarstellung eines U-Boot-Gleichstromnetzes basierend auf einem Gleichstrominselnetzes gemäß FIG 1,
- FIG 8: eine Prinzipdarstellung eines U-Boot-Gleichstromnetzes basierend auf einem Gleichstrominselnetzes gemäß FIG 5,
- FIG 9: das Gleichstrominselnetze gemäß FIG 1 mit einer übergeordneten Steuereinrichtung und
- FIG 10: das Gleichstrominselnetze gemäß FIG 5 mit einer übergeordneten Steuereinrichtung,
- FIG 11: das Gleichstrominselnetz von FIG 1 mit einer selektiven Auslösung,
- FIG 12: eine bevorzugte Ausgestaltung eines in FIG 11 gezeigten Kompensationsmoduls,
- FIG 13: eine vereinfachte Darstellung eines U-Boot-Gleichstromnetzes mit Schalt- und Kompensationseinheiten,
- FIG 14: eine bevorzugt Ausgestaltung der Schalt- und Kompensationseinheiten von FIG 13.

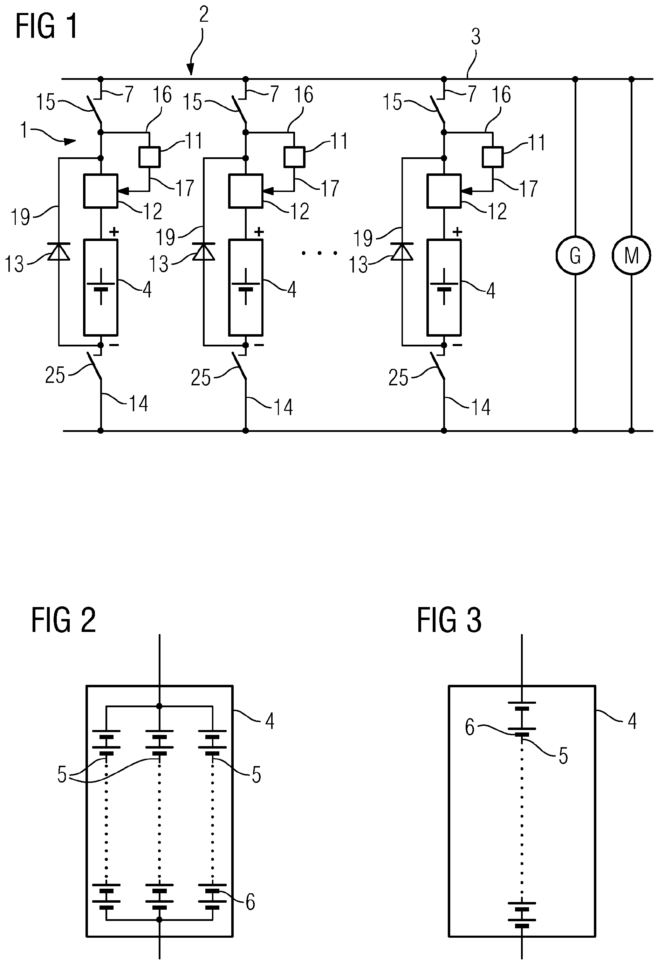

FIG 1 zeigt eine Prinzipdarstellung eines ersten erfindungsgemäßen Gleichstrominselnetzes 3, das eine Hochleistungs-Batterie 2 zur Speicherung elektrischer Energie, einen Generator G zur Erzeugung elektrischer Energie und als Energieverbraucher einen Motor M umfasst. Die Batterie 2 umfasst mehrere parallel geschaltete Batteriemodule 4 mit jeweils einem Strang oder mehreren parallel geschalteten Strängen von in Reihe geschalteten Hochleistungs-Batteriezellen, wobei der bzw. jeder der Stränge die Netzspannung des Gleichstrominselnetzes hat.

Beispielsweise kann ein Batteriemodul - wie in FIG 2 dargestellt - drei parallel geschaltet Stränge 5 von jeweils in Reihe geschalteten Batteriezellen 6 umfassen. Bevorzugt umfasst jedoch ein Batteriemodul 4 - wie in FIG 3 dargestellt - nur einen einzigen Strang 5 von in Reihe geschalteten Batteriezellen 6.

Die Batteriezellen 6 bestehen beispielsweise aus Li-Ionen-Batteriezellen, Li-Polymerbatteriezellen, Li-Eisen-Phosphat-Batteriezellen, Li-Titanat-Batteriezellen oder Kombinationen daraus.

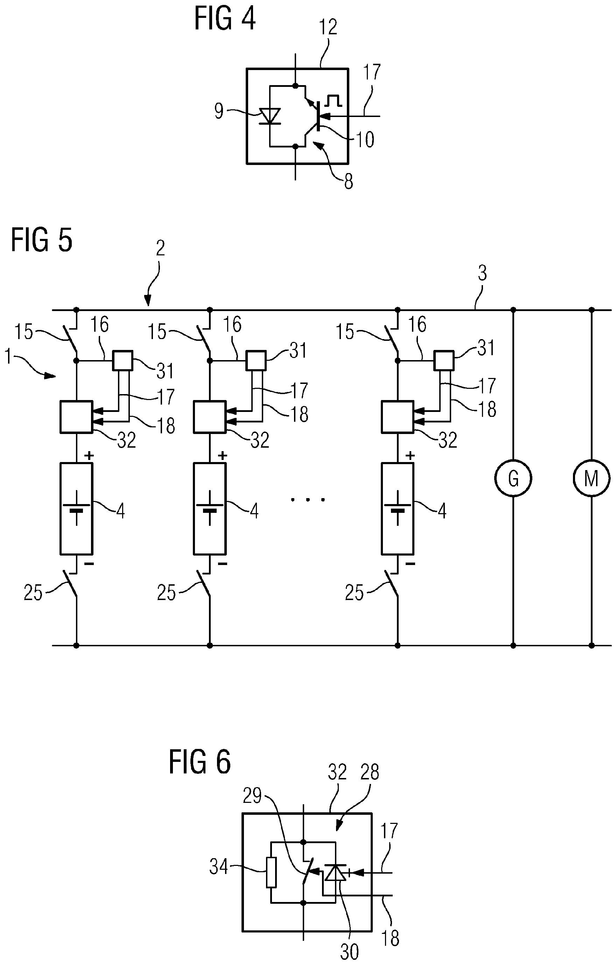

Eine Schnellschalteinrichtung 1 weist für jedes der Batteriemodule 4 jeweils eine Schnellschalteinheit 12 auf, die - wie in FIG 4 dargestellt - eine Parallelschaltung 8 aus einer den Ladestrom des Batteriemoduls 4 durchlassend gepolten Diode 9 und einem den Entladestrom durchlassend gepolten Leistungshableiterschalter 10 umfasst. Diese Parallelschaltung 8 ist in einem Anschlussleiter 7 des Batteriemoduls 4 zu dem Gleichstromnetz 3 angeordnet. Der Schaltzustand des Leistungshalbleiterschalter 10 ist durch eine Überwachungs- und Steuereinrichtung 11 steuerbar, wobei die Überwachungs- und Steuereinrichtung 11 derart ausgebildet ist, dass sie zum Abschalten eines Entladestromes in dem Anschlussleiter 7 durch Schalten des Leistungshalbleiterschalter 10 in einen nichtleitenden Zustand den in dem Anschlussleiter 7 fließenden Entladestrom unterbricht.

Die Überwachungs- und Steuereinrichtung 11 ist dabei derart ausgebildet, dass sie einen Kurzschlussstrom in dem Anschlussleiter 7 schnell erfasst und durch Schalten des Leistungshalbleiterschalters 10 in einen nichtleitenden Zustand den Kurzschlussstrom unterbricht.

Die Überwachungs- und Steuereinrichtung 11 erfasst hierzu über eine Leitung 16 den Entladestrom in dem Anschlussleiter 7 und steuert über eine Steuerleitung 17 den Halbleiterschalter 10.

Die Überwachungs- und Steuereinrichtung 11 erkennt somit einen Kurzschluss in dem Netz und sperrt innerhalb von Mikrosekunden den steuerbaren Halbleiter, so dass der Kurzschlussstrom des Moduls 4 und somit auch der Summenkurzschlussstrom sämtlicher Module 4 auf eine ungefährlichen Wert begrenzt und abgeschaltet wird.

Der Anschlussleiter 7, in dem die Schalteinheit 12 bzw. die Parallelschaltung 8 angeordnet ist, verbindet den Pluspol (+) des Batteriemoduls 4 mit dem Gleichstromnetz 3.

Eine parallel zu der Parallelschaltung 8 einer Schalteinheit 12 geschaltete Diode 13, die in einem Leiterpfad 19 angeordnet ist, der den mit dem Pluspol (+) eines Batteriemoduls 4 verbundenen Anschlussleiter 7 und einen mit dem Minuspol (-) des Batteriemoduls 4 verbundenen Anschlussleiter 14 verbindet, dient zur Unterbindung von Schaltüberspannungen an dem Leistungshalbleiter 10.

Zur Möglichkeit der Abschaltung eines Batteriemoduls 4 bzw. Stranges 5 bei schadhaftem Halbleiter und zur galvanische Trennung eines Batteriemoduls 4 bzw. Stranges 5 von dem Netz 3 ist in den Anschlussleiter 7, der den Pluspol (+) des Batteriemoduls 4 mit dem Gleichstromnetz 3 verbindet und in den Anschlussleiter 14, der den Minuspol (-) des Batteriemoduls 4 mit dem Gleichstromnetz 3 verbindet, jeweils ein mechanischer Schalter 15 bzw. 25, z.B. ein Trennschalter, angeordnet. Der Schalter 15 bzw. 25 kann hand- oder ggf. fernbetrieben sein. In dem Anschlussleiter 7 ist der mechanische Schalter 15 dabei zwischen der Schalteinheit 12 und dem Gleichstromnetz 3 angeordnet.

Ein in FIG 5 gezeigtes Gleichstrominselnetz unterscheidet sich von dem in FIG 1 gezeigten Gleichstrominselnetz dadurch, dass bei der Schalteinrichtung 1 die Dioden 13 weggelassen sind, dass die Schalteinrichtung 1 Überwachungs- und Steuereinrichtungen 31 statt der Überwachungs- und Steuereinrichtungen 11 umfasst und dass es in FIG 6 näher gezeigte Schalteinheiten 32 statt der Schalteinheiten 12 umfasst.

Die Schalteinheiten 32 umfassen jeweils eine Parallelschaltung 28 aus einem den Ladestrom und den Entladestrom des Batteriemoduls 4 durchlassenden mechanischen Schalter 29 und zumindest einem den Entladestrom durchlassend gepolten Leistungshalbleiterschalter 30.

Die Parallelschaltung 28 der Schalteinheit 32 ist dabei auch in diesem Fall in dem Anschlussleiter 7 des Batteriemoduls 4 zu dem Gleichstromnetz 3 angeordnet. Die Schaltzustände des mechanischen Schalters 29 und des Leistungshalbleiterschalters 30 sind durch eine Überwachungs- und Steuereinrichtung 31 steuerbar, wobei die Überwachungs- und Steuereinrichtung 31 derart ausgebildet ist, dass sie zum Abschalten eines Entladestromes in dem Anschlussleiter 7 durch Öffnen des mechanischen Schalters 29 einen durch den mechanischen Schalter fließenden Strom auf den Halbleiterschalter 30 kommutiert und anschließend durch Schalten des Halbleiterschalters 30 in einen nichtleitenden Zustand den in dem Anschlussleiter 7 fließenden Entladestrom unterbricht.

Die Überwachungs- und Steuereinrichtung 31 ist dabei derart ausgebildet, dass sie einen Kurzschlussstrom in dem Anschlussleiter 7 schnell erfasst und durch Schalten des Leistungshalbleiterschalters 30 in einen nichtleitenden Zustand den Kurzschlussstrom unterbricht.

Die Überwachungs- und Steuereinrichtung 31 ist hierbei zur Steuerung des Schaltzustandes des mechanischen Schalters 29 zusätzlich noch über eine Steuerleitung 18 mit dem mechanischen Schalter 29 verbunden.

Der Halbleiterschalter 30 kann beim Öffnen des mechanischen Schalters 29 bereits in einem leitenden Zustand sein. Zur Vermeidung von Verlusten ist der Halbleiterschalter 30 jedoch bei Entladebetrieb eines Batteriemoduls 4, d.h. auch beim Öffnen des mechanischen Schalters 29, in einem nichtleitenden Zustand und die Überwachungs- und Steuereinrichtung ist derart ausgebildet, dass sie den Halbleiterschalter 30 mit dem Öffnen des mechanischen Schalters 29 in einen leitenden Zustand schaltet.

Der mechanische Schalter 29 ist bevorzugt als ein Vakuumschalter ausgebildet.

Eine Schnellschalteinheit 32 umfasst zusätzlich noch einen parallel zu dem Halbleiterschalter 30 geschalteten Varistor 34 zur Aufnahme von elektrischer Energie und zur Begrenzung von Überspannungen, die nach der Schaltung des Halbleiterschalters 30 in den nichtleitenden Zustand an dem Halbleiterschalter 30 auftreten.

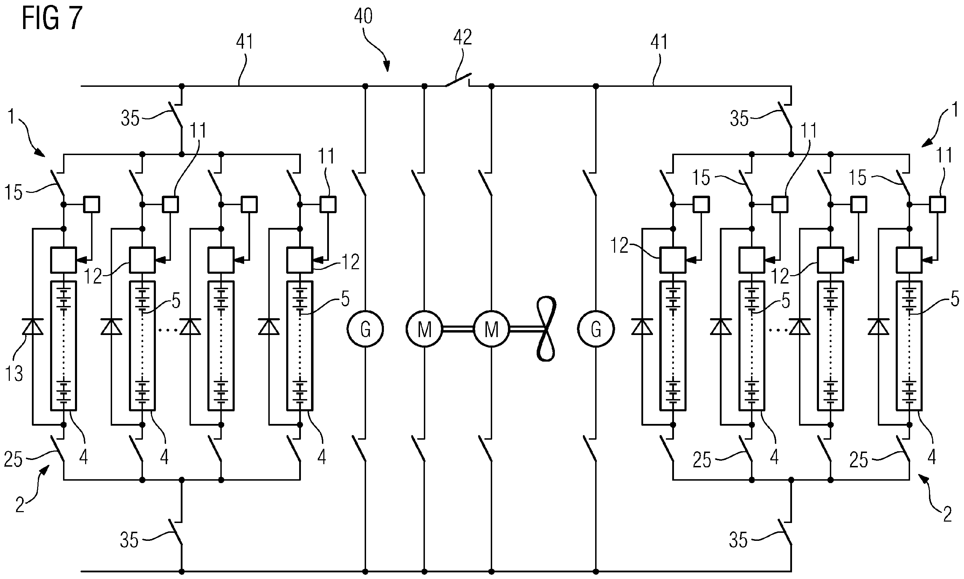

Ein in FIG 7 gezeigtes U-Boot-Gleichstromnetz 40 umfasst zwei Teilnetze 41, die über eine Netzkopplung 42 miteinander koppelbar sind. Jedes der Teilnetze 41 umfasst jeweils eine in FIG 1 gezeigte Batterie 2 und Schalteinrichtung 1. Jedes der Batteriemodule 4 umfasst genau einen Strang 5 von in Reihe geschalteten Batteriezellen, so dass die Schalteinrichtung 1 einer Batterie 1 für jeden der Stränge 5 jeweils eine Schalteinheit 12, eine Steuer- und Überwachungseinrichtung 11 und eine Diode 13 umfasst.

Typischerweise hat jeder der Stränge eine Nennspannung von 900 V und eine Batterie umfasst etwa 20 parallel geschaltete Stränge.

Die Schalter 15 sind bevorzugt als eine mechanische Trennvorrichtung ausgebildet und dienen zur Potentialtrennung des jeweiligen Batteriemoduls 4 bzw. Stranges 5 von dem jeweiligen Teilnetz 41.

Die Schalter 25 sind bevorzugt als Leistungsschalter (z.B. als Kompaktschalter) ausgebildet und dienen zum einen zur Potentialtrennung des jeweiligen Batteriemoduls 4 bzw. Stranges 5 von dem jeweiligen Teilnetz 41 und zum anderen zur Kurzschlussabschaltung bei einem Versagen der dem jeweiligen Batteriemodul 4 bzw. Strang 5 zugeordneten Schalteinheit 12. Zusätzlich ist jede der Batterien 2 über in Reihe zu den Batterien 2 geschaltete mechanische Schalter 35 von dem jeweiligen Teilnetz 41 trennbar.

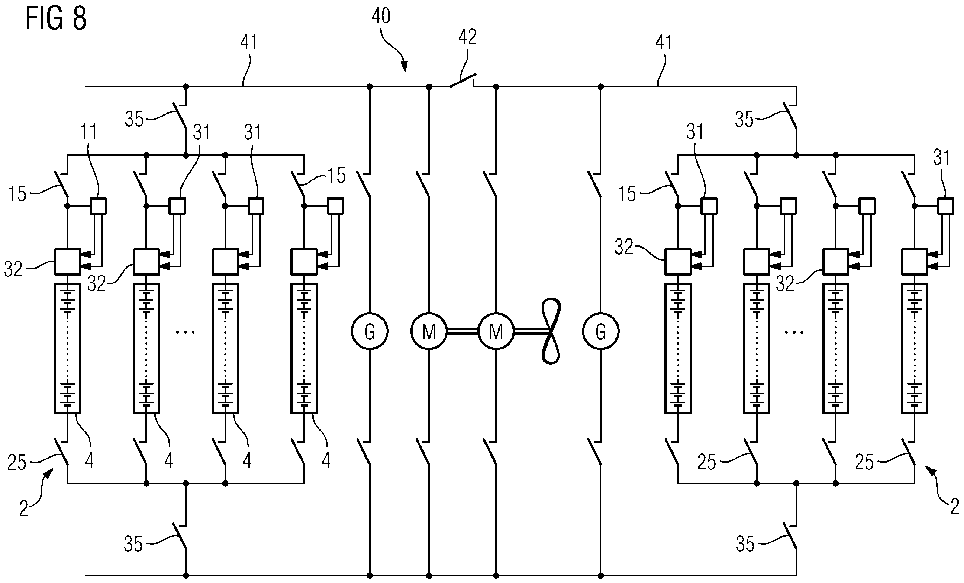

Ein in FIG 8 gezeigtes U-Boot-Gleichstromnetz 40 unterscheidet sich von dem in FIG 7 gezeigten U-Boot-Gleichstromnetz 40 dadurch, dass die Schalteinrichtung 1 auf der in FIG 5 gezeigten Lösung basiert.

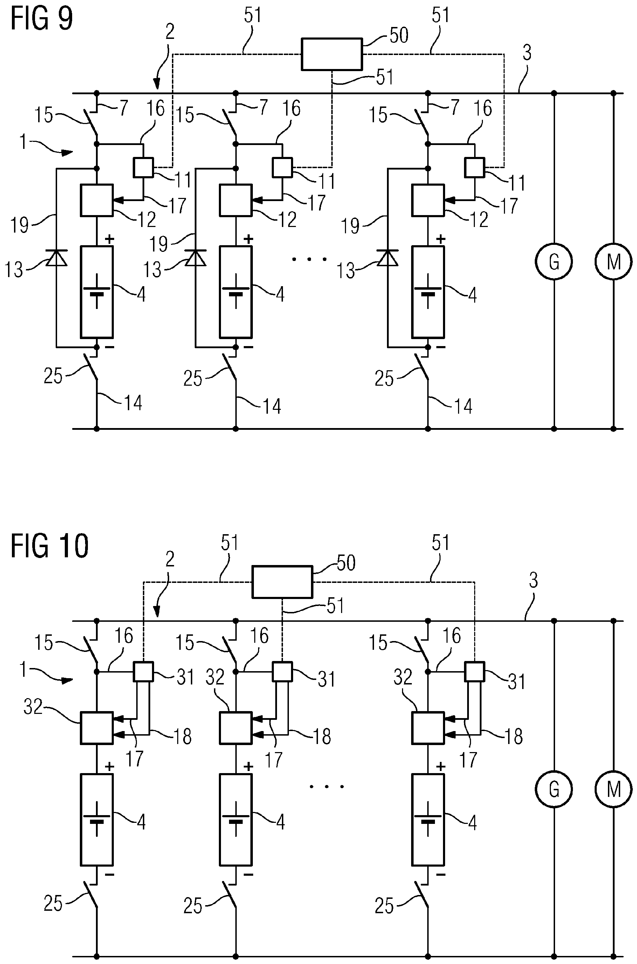

FIG 9 und FIG 10 zeigen das Gleichstrominselnetz gemäß FIG 1 bzw. FIG 5, wobei jeweils eine zusätzliche übergeordnete Steuereinrichtung 50 vorhanden ist, die über Leitungen 51 mit den Überwachungs- und Steuereinrichtungen 11 bzw. 31 verbunden ist und darüber Ausschaltbefehle für ein betriebsbedingtes Abschalten von Entladeströmen durch die Schalteinheiten 12 bzw. 32 an die Überwachungs- und Steuereinrichtungen 11 bzw. 31 übermittelt und Rückmeldungen von den Überwachungs- und Steuereinrichtungen 11 bzw. 31 erhält.

Wenn auch die betriebsbedingten Entladeströme mittels der Halbleiterschalter abgeschaltet werden, können für die mechanischen Schalter kleiner bauende Ausführungen gewählt werden.

Mit der Erfindung ist eine einfachere Integration von Hochleistungs-Batterien bei Neuanlagen und Nachrüstungen in bestehenden Anlagen möglich

Eine Steuerspannung für die Überwachungs- und Steuereinrichtungen 11, 31 und Schalteinheiten 12, 32 kann durch eine Eigenversorgung aus dem zugeordneten Batteriemodul 4 oder durch eine davon unabhängige Versorgung (z. B. Stützbatterie, etc.) erfolgen.

Statt jeweils einer Überwachungs- und Steuereinrichtungen 11, 31 kann auch eine einzige übergeordnete Überwachungs- und Steuereinrichtungen vorhanden sein.

Nach Begrenzung und Abschaltung eines Kurzschlusses ist eine Schnellschalteinheit 12, 32 sofort wieder betriebsbereit. Die Ausführung ist vorteilhaft jedoch so gestaltet, dass ein Wiedereinschalten ggf. erst nach einer Quittierung zulässig ist (d.h. Fehlerursache ist behoben).

Bei einem schadhaften Halbleiter (z. B. durch ein Durchlegieren) zeigt von Vorteil eine Überwachung den Fehler sofort an, so dass Maßnahmen (z.B. Wegschalten des Batteriemoduls bzw. Stranges) ergriffen werden können. Für den Fall, dass in diesem Moment ein Kurzschluss erfolgen würde, wäre eine nachgeschaltete Schalteinrichtung (z. B. Batterieschalteinrichtung) in der Lage, den Kurzschlussstrom eines oder sogar mehrerer Stränge zu beherrschen.

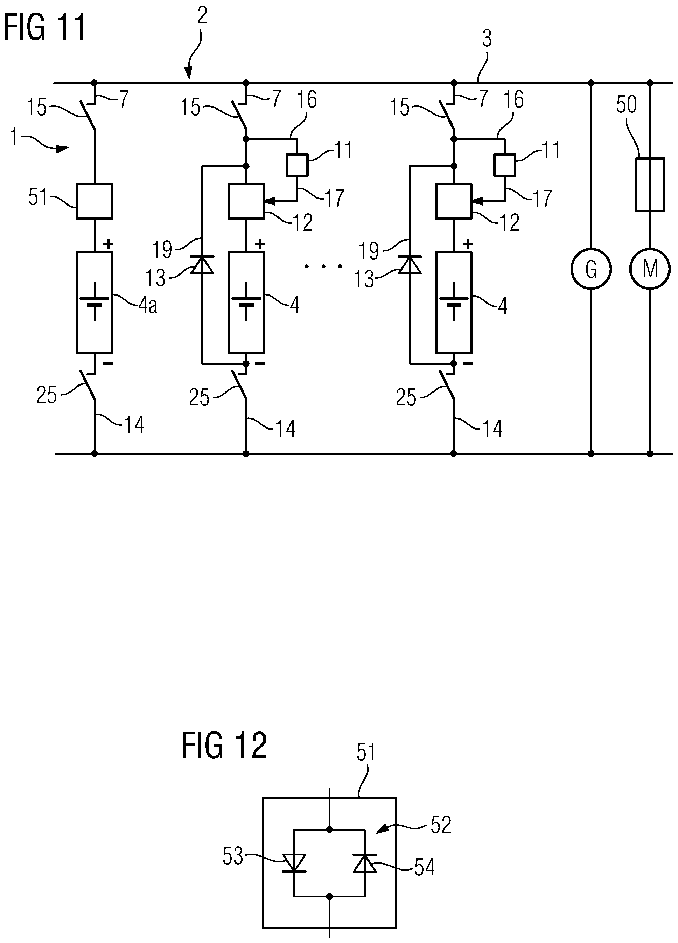

Das in FIG 11 gezeigte Gleichstrominselnetz 3 entspricht in seinen Grundzügen dem Gleichstrominselnetz 3 von FIG 1, wobei jedoch der Verbraucher M nun über ein Schutzorgan in Form einer Sicherung 50 mit dem Gleichstromnetz 3 verbunden ist. Die Schnellschalteinheiten 12 sind somit zwischen die Sicherung 50 und die Batteriemodule 4 geschaltet.

Wenn die Schnellschalteinrichtung 1 für jedes der Batteriemodule 4 jeweils eine Schnellschalteinheit 12 aufweist und die Schnellschalteinheiten 12 im Falle eines Kurzschlusses am Verbraucher M schneller als die nachgeschaltet Sicherung 50 auslösen, dann würde ein Kurzschluss am Verbraucher M zu keiner Auslösung der Sicherung 50 führen. Beispielsweise kann unter den in U-Boot-Gleichstromnetzen herrschenden Bedingungen die Auslösezeit der in den FIG 4 und 6 dargestellten den Schnellschalteinheiten 12, 32 im Bereich von Mikrosekunden liegen, während sie im Fall der Sicherung 50 im Millisekunden-Bereich liegt. Es ist somit keine Selektivität zwischen den Schnellschalteinheiten 12 und der Sicherung 50 gegeben. Dies kann bis zu einem Black-Out des gesamten Gleichstrominselnetzes 3 führen. Um dies zu verhindern, ist bei einem Batteriemodul 4a gezielt keine Schalteinheit 12 zwischen das Batteriemodul 4a und die Sicherung 50 bzw. den Verbraucher M geschaltet. Somit wird für das Batteriemodul 4a im Falle eines Kurzschlusses am Verbraucher M der Kurzschlussstrom gezielt nicht abgeschaltet. Der nicht abgeschaltete Kurzschlussstrom führt dann zu einer Auslösung, d.h. einem Schmelzen, der Sicherung 50. Hierdurch wird der Verbraucher von dem Gleichstromnetz 2 getrennt. Anschließend können die abgeschalteten Batteriemodule 4 durch die Schnellschalteinheiten 12 der Schalteinrichtung 1 automatisch wieder dem Gleichstromnetz 2 zugeschaltet werden.

Ein Stromfluss von einem Batteriemodul 4 zu dem Verbraucher M führt üblicherweise zu einem Spannungsabfall an der dazwischen geschalteten Schnellschalteinheit 12 und somit zu unterschiedlichen Entladungen der mit und der ohne eine zwischengeschaltete Schnellschalteinheit 12 mit dem Verbraucher M verbunden Batteriemodule 4, 4a. Zur gleichmäßigen Entladung aller Batteriemodule 4, 4a ist deshalb zwischen das Batteriemodul 4a und die Sicherung 50, hier in die Anschlussleitung 7 des Batteriemoduls 4a zu dem Gleichstromnetz 3, eine Kompensationseinheit 51 zu Kompensation der Strom/Spannungs-Charakteristik der Schnellschalteinheiten 12 geschaltet. Bevorzugt weist die Kompensationseinheit 51 im Bereich der Betriebsspannungen- und ströme, zumindest für die Entladeströme, des Batteriemoduls 4a die gleiche Strom/Spannungs-Charakteristik wie eine Schnellschalteinheit auf.

In einer in FIG 12 gezeigten konstruktiv besonders einfachen Ausgestaltung umfasst die Kompensationseinheit 51 eine Parallelschaltung 52 aus einer den Ladestrom des Batteriemoduls 4a durchlassend gepolten Diode 53 und einer den Entladestrom durchlassend gepolten Diode 54.

Bei einer Verwendung einer Schnellschalteinheit 12 gemäß FIG 4 kommt für die Diode 53 bevorzugt ein Diode vom gleichen Typ wie der der Diode 9 der in FIG 4 gezeigten Schnellschalteinheit 12 zur Verwendung, so dass die Diode 53 die gleiche Strom/Spannungs-Charakteristik wie die den Ladestrom des Batteriemoduls 4 durchlassend gepolten Diode 9 der Schnellschalteinheit 12 aufweist.

Die Diode 54 ist bevorzugt derart gewählt, dass sie im Wesentlichen die gleiche Strom/Spannungs-Charakteristik des Leistungshalbleiters 10 der Schnellschalteinheit 12 gemäß FIG 4 aufweist.

Zu schnellen Wiederverfügbarkeit des Netzes nach einem Kurzschluss am Verbraucher können die Schnellschalteinheiten derart ausgebildet sein, dass sie nach einer durch einen Kurzschluss verursachten Trennung der Batteriemodule 4 von dem Gleichstromnetz 2 die Spannung des Gleichstromnetzes 3 erfassen und nach Spannungswiederkehr die Batteriemodule 4 automatisch wieder dem Gleichstromnetz 3 zuschalten.

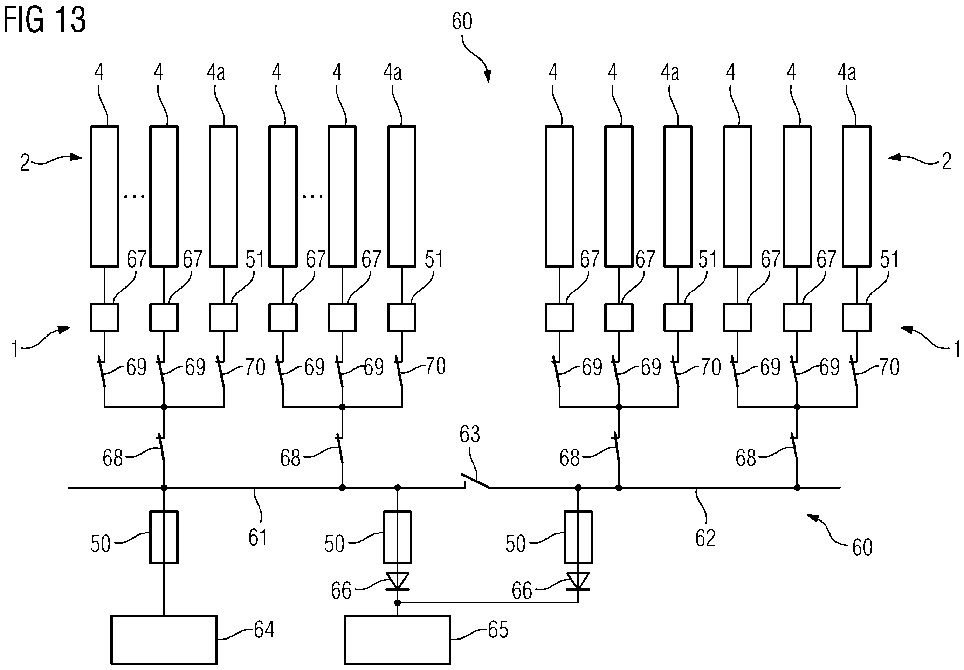

FIG 13 zeigt in einer vereinfachten Darstellung nur für die Hinleiter (d.h. die Leiter mit positivem Potenzial) ein U-Boot-Gleichstromnetz 60, das aus zwei Teilnetzen 61, 62 besteht, die über eine Netzkupplung 63 miteinander verbindbar sind.

Ein erster Verbraucher 64 ist nur aus dem Teilnetz 61 mit elektrischer Energie versorgbar und hierzu über eine Sicherung 50 an das Teilnetz 61 angeschlossen.

Ein zweiter Verbraucher 65 ist aus beiden Teilnetz 61, 62 mit elektrischer Energie versorgbar und hierzu über jeweils eine Sicherung 50 und eine Diode 66 (zur Entkopplung der beiden Teilnetze 61, 62) an die beiden Teilnetze 61, 62 angeschlossen.

Jedes der beiden Teilnetze 61, 62 umfasst jeweils eine Hochleistungsbatterie 2 mit jeweils mehreren parallel geschaltete Batteriemodulen 4, 4a mit jeweils einem Strang oder mehreren parallel geschalteten Strängen von in Reihe geschalteten Hochleistungs-Batteriezellen umfasst, wobei der bzw. jeder der Stränge die Netzspannung des Netzes 60 hat.

Jeweils eine Schnellschalteinrichtung 1 dient zur Unterbrechung von Kurzschlussströmen der Batterie 1 eines Teilnetzes 61 bzw. 62.
Die Schnellschalteinrichtung 1 umfasst mehrere Schnellschalteinheiten 67 und mehrere Kompensationseinheiten 51. Als Schnellschalteinheiten können beispielsweise die Schnellschalteinheiten 12 von FIG 4 oder die Schnellschalteinheiten 32 von FIG 6 zum Einsatz kommen. Grundsätzlich sind aber auch andere Ausgestaltungen der Schnellschalteinheiten 67 möglich.

Jedes der Batteriemodule 4 ist über jeweils genau eine ihm zugeordnete und mit ihm in Reihe geschaltete Schnellschalteinheit 67 an das jeweilige Teilnetz 61, 62 angeschlossen. Es ist somit zwischen ein Batteriemodul 4 und eine Sicherung 50 des Verbrauchers 64 bzw. des Verbrauchers 65 genau eine Schnellschalteinheit 67 geschaltet.

Die Batteriemodule 4a sind über jeweils genau eine ihm zugeordnete und mit ihm in Reihe geschaltete Kompensationseinheit 51 an das jeweilige Teilnetz 61, 62 angeschlossen. Es ist somit zwischen ein Batteriemodul 4 und eine Sicherung 50 des Verbrauchers 64 bzw. des Verbrauchers 65 genau eine Kompensationseinheit 51 geschaltet.

Die Schnellschalteinheiten 67 weisen eine Auslösezeit auf, die kleiner als die der nachgeschalteten Sicherungen 50 der Verbraucher 64, 65 ist.

Ein Kurzschluss am Verbraucher 64 führt somit zu einer Abschaltung der Batteriemodule 4 der Batterie 1 des Teilnetzes 61 durch ihre jeweiligen Schnellschalteinheiten 67. Die Kurzschlussströme der Batteriemodule 4a führen zu einer Auslösung der Sicherung 50 des Verbrauchers 64. Danach können durch die Schnellschalteinheiten 67 die Batteriemodule 4 dem Teilnetz 61 automatisch wieder zugeschaltet werden. Bevorzugt ist dabei schon der Kurzschlussstrom eines einzigen Batteriemoduls 4a ausreichend für ein Auslösen der Sicherung 50. Da pro Batterie 1 zwei Batteriemodule 4a ohne Schnellschalteinheit 67 vorhanden sind, ist eine Redundanz gegeben, da auch bei einem Ausfall eines der beiden Batteriemodule 4a noch eine Auslösung der Sicherung 50 gewährleistet ist.

Ein Kurzschluss am Verbraucher 65 führt zu einer Abschaltung der Batteriemodule 4 der Batterien 2 beider Teilnetzes 61, 62 durch ihre jeweiligen Schnellschalteinheiten 67. Die Kurzschlussströme der Batteriemodule 4a beider Batterien 1 führen jedoch zu einer Auslösung beider Sicherungen 50 des Verbrauchers 65. Danach können durch die Schnellschalteinheiten 67 die Batteriemodule 4 der beiden Batterien 2 den beiden Teilnetzen 61, 62 automatisch wieder zugeschaltet werden.

Da in beiden Batterien 1 jeweils zwei Batteriemodule 4a ohne Schnellschalteinheiten 67 vorhanden sind, ist auch hier eine Redundanz gegeben. Bei einem eventuelllen Betrieb einer der beiden Batterien 1 mit abgeschalteten Batteriemodulen 4a werden die beiden Teilnetze 61, 62 über die Netzkupplung 63 miteinander gekuppelt.

Als Leistungsschalter ausgebildete Batterieschalter 68 dienen zum betriebsmäßigen Schalten jeweils eines Teils einer Batterie 1. Sie dienen weiterhin als Back-Up-Schutz für den Fall, dass eine oder mehrere vorgeschaltete Schnellschalteinheiten 67 versagen.

Als Kompaktleistungsschalter ausgebildete Batteriemodulschalter 69 dienen der allpoligen potenzialfreien Abtrennung eines Batteriemoduls 4 (z.B. für Wartungsarbeiten an dem jeweiligen Batteriemodul 4 oder der zugehörigen Schnellschalteinheit 67). Sie dienen weiterhin als Back-Up-Kurzschlussschutz für die zugehörige Schnellschalteinheit 12.

Ebenfalls bevorzugt als Kompaktleistungsschalter ausgebildete Batteriemodulschalter 70 dienen der Abtrennung eines Batteriemoduls 4a im Fehlerfall (z.B. bei Überlast, Überspannung, etc.).

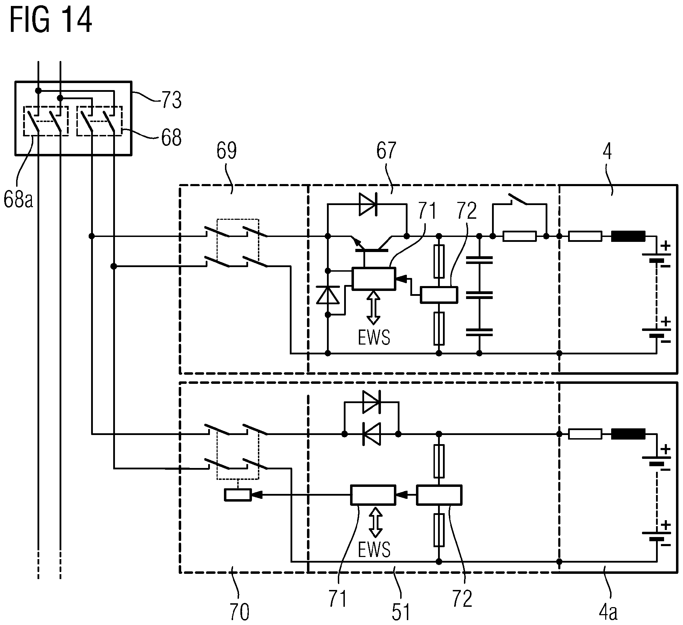

FIG 14 zeigt in einer Detailansicht eine bevorzugte Ausgestaltung einer Schnellschalteinheit 67 und einer Kompensationseinheit 51 von FIG 13. Die Schnellschalteinheit 67 entspricht dabei im Wesentlichen der in FIG 4 gezeigten Schnellschalteinheit 12 und die Kompensationseinheit der in FIG 12 gezeigten Kompensationseinheit. Die Schnellschalteinheit umfasst hierbei eine Überwachungs- und Steuereinheit 71 und eine Stromversorgung 72. Eine Batterieschalteinrichtung 73 umfasst Batterieschalter 68 zum betriebsmäßigen Schalten der jeweiligen Teilbatterie.

## Patentansprüche

1. Schnellschalteinrichtung (1) für eine Hochleistungs-Batterie (2) in einem Gleichstrominselnetz (3), insbesondere einem U-Boot-Gleichstromnetz, wobei die Hochleistungsbatterie (2) mehrere parallel geschaltete Batteriemodule (4) mit jeweils einem Strang (5) oder mehreren parallel geschalteten Strängen (5) von in Reihe geschalteten Hochleistungs-Batteriezellen (6) umfasst, wobei der bzw. jeder der Stränge (5) die Netzspannung des Gleichstrominselnetzes (2) hat, wobei die Schnellschalteinrichtung (1) mehrere Schnellschalteinheiten (12) aufweist, die in Anschlussleiter (7) der Batteriemodule (4) zu dem Gleichstrominselnetz (2) geschaltet sind,
**dadurch gekennzeichnet, dass**
die Schnellschalteinheiten (12) jeweils eine Parallelschaltung (8) aus einer den Ladestrom des Batteriemoduls (4) durchlassend gepolten Diode (9) und einem den Entladestrom durchlassend gepolten Leistungshableiterschalter (10) umfassen,
- wobei der Schaltzustand des Leistungshalbleiterschalter (10) durch eine Überwachungs- und Steuereinrichtung (11) steuerbar ist und
- wobei die Überwachungs- und Steuereinrichtung (11) derart ausgebildet ist, dass sie zum Abschalten eines Entladestromes des Batteriemoduls (4) in dem Anschlussleiter (7) durch Schalten des Leistungshalbleiterschalters (10) in einen nichtleitenden Zustand den in dem Anschlussleiter (7) fließenden Entladestrom unterbricht.

2. Schnellschalteinrichtung (1) nach Anspruch 1,
**dadurch gekennzeichnet, dass** die Überwachungs- und Steuereinrichtung (11) derart ausgebildet ist, dass sie einen Kurzschlussstrom in dem Anschlussleiter (7) schnell erfasst und durch Schalten des Leistungshalbleiterschalters (10) in einen nichtleitenden Zustand den Kurzschlussstrom unterbricht.

3. Schnellschalteinrichtung (1) nach Anspruch 1 oder 2, **gekennzeichnet durch** eine parallel zu der Parallelschaltung (8) geschaltete Diode (13), die in einem Leiterpfad (19) angeordnet ist, der einen mit dem Pluspol des Batteriemoduls (4) verbundenen Anschlussleiter (7) und einen mit dem Minuspol des Batteriemoduls (4) verbundenen Anschlussleiter (14) verbindet.

4. Schnellschalteinrichtung (1) für eine Hochleistungs-Batterie (2) in einem Gleichstrominselnetz (3), insbesondere einem U-Boot-Gleichstromnetz, wobei die Hochleistungsbatterie (2) mehrere parallel geschaltete Batteriemodule (4) mit jeweils einem Strang (5) oder mehreren parallel geschalteten Stränge (5) von in Reihe geschalteten Hochleistungs-Batteriezellen (6) umfasst, wobei der bzw. jeder der Stränge (5) die Netzspannung des Gleichstrominselnetzes (2) hat, wobei die Schnellschalteinrichtung (1) mehrere Schnellschalteinheiten (32) aufweist, die in Anschlussleiter (7) der Batteriemodule (4) zu dem Gleichstrominselnetz (2) geschaltet sind, **dadurch gekennzeichnet, dass**
die Schnellschalteinheiten jeweils eine Parallelschaltung (28) aus einem den Ladestrom und den Entladestrom des Batteriemoduls (4) durchlassenden mechanischen Schalter (29) und zumindest einem den Entladestrom durchlassend gepolten Leistungshalbleiterschalter (30) umfassen,
- wobei die Schaltzustände des mechanische Schalters (29) und des Leistungshalbleiterschalters (30) durch eine Überwachungs- und Steuereinrichtung (31) steuerbar sind und
- wobei die Überwachungs- und Steuereinrichtung (31) derart ausgebildet ist, dass sie zum Abschalten eines Entladestromes in dem Anschlussleiter (7) durch Öffnen des mechanischen Schalters (29) einen durch den mechanischen Schalter fließenden Strom auf den Halbleiterschalter (30) kommutiert und anschließend durch Schalten des Halbleiterschalters (30) in einen nichtleitenden Zustand den in dem Anschlussleiter fließenden Entladestrom unterbricht.

5. Schnellschalteinrichtung (1) nach Anspruch 4, **dadurch gekennzeichnet, dass** die Überwachungs- und Steuereinrichtung (31) derart ausgebildet ist, dass sie einen Kurzschlussstrom in dem Anschlussleiter (7) schnell erfasst und durch Schalten des Leistungshalbleiterschalters (30) in einen nichtleitenden Zustand den Kurzschlussstrom unterbricht.

6. Schnellschalteinrichtung (1) nach Anspruch 4 oder 5, **dadurch gekennzeichnet, dass** der Halbleiterschalter (30) beim Öffnen des mechanischen Schalters (29) in einem leitenden Zustand ist.

7. Schnellschalteinrichtung (1) nach Anspruch 4 oder 5, **dadurch gekennzeichnet, dass** der Halbleiterschalter (30) beim Öffnen des mechanischen Schalters (29) in einem nichtleitenden Zustand ist und die Überwachungs- und Steuereinrichtung (31) derart ausgebildet ist, dass sie den Halbleiterschalter (30) mit dem Öffnen des mechanischen Schalters (29) in einen leitenden Zustand schaltet.

8. Schnellschalteinrichtung (1) nach einem der Ansprüche 4 bis 7, **dadurch gekennzeichnet, dass** der mechanische Schalter (29) als ein Vakuumschalter ausgebildet ist.

9. Schnellschalteinrichtung (1) nach einem der Ansprüche 4 bis 8, **gekennzeichnet durch** einen parallel zu dem Halbleiterschalter (30) geschalteten elektrischen Widerstand, vorzugsweise einen Varistor (34), zur Aufnahme von elektrischer Energie und zur Begrenzung von Überspannungen, die nach der Schaltung des Halbleiterschalters (30) in den nichtleitenden Zustand an dem Halbleiterschalter (30) auftreten.

10. Schnellschalteinrichtung (1) nach einem der vorhergehenden Ansprüche, **dadurch gekennzeichnet, dass** jedes der Batteriemodule (4) nur jeweils einen einzigen Strang (5) von in Reihe geschalteten Hochleistungsenergiespeicher-Batteriezellen (6) umfasst.

11. Schnellschalteinrichtung (1) nach einem der vorhergehenden Ansprüche, **dadurch gekennzeichnet, dass** der Anschlussleiter (7) den Pluspol des Batteriemoduls (4) mit dem Gleichstromnetz verbindet.

12. Schnellschalteinrichtung (1) nach einem der vorhergehenden Ansprüche, **dadurch gekennzeichnet, dass** in einem Anschlussleiter (7), der den Pluspol des Batteriemoduls (4) mit dem Gleichstromnetz (3) verbindet und in einem Anschlussleiter (14) der den Minuspol des Batteriemoduls (4) mit dem Gleichstromnetz (3) verbindet jeweils ein mechanischer Schalter (15 bzw. 25), insbesondere ein Trennschalter, angeordnet ist.

13. Schnellschalteinrichtung (1) nach einem der vorhergehenden Ansprüche, **dadurch gekennzeichnet, dass** die Batterienzellen (6) aus Li-Ionen-Batteriezellen, Li-Polymerbatteriezellen, Li-Eisen-Phosphat-Batteriezellen, Li-Titanat-Batteriezellen oder Kombinationen daraus bestehen.

14. Gleichstrominselnetz (3, 60), insbesondere U-Boot-Gleichstromnetz, umfassend
- einen elektrischen Verbraucher (M),
- eine Hochleistungs-Batterie (2) zur Versorgung des elektrischen Verbrauchers mit elektrischer Energie, wobei die Hochleistungs-Batterie mehrere parallel geschaltete Batteriemodule (4, 4a) mit jeweils einem Strang (5) oder mehreren parallel geschalteten Strängen (5) von in Reihe geschalteten Hochleistungs-Batteriezellen (6) umfasst, wobei der bzw. jeder der Stränge (5) die Netzspannung des Gleichstrominselnetzes (3) hat,
- ein zwischen den elektrischen Verbraucher (M) und die Hochleistungs-Batterie (1) geschaltetes Schutzorgan (50) für den Verbraucher (M), insbesondere eine Sicherung,
**gekennzeichnet durch**
- eine Schnellschalteinrichtung (1) nach einem der vorhergehenden Ansprüche, mit Schnellschalteinheiten (12, 32, 67) zur Unterbrechung von Kurzschlussströmen der Batteriemodule (4), wobei die Schnellschalteinheiten zwischen die Batteriemodule (4) und das Schutzorgan (50) geschaltet sind, wobei zwischen zumindest eines der Batteriemodule (4a) und dem Schutzorgan (50) keine Schnellschalteinheit (12, 32, 67) geschaltet ist.

15. Gleichstrominselnetz (3, 60) nach Anspruch 14,
**dadurch gekennzeichnet, dass** zur gleichmäßigen Entladung aller Batteriemodule (4, 4a) in die elektrische Verbindung zwischen dem zumindest einen Batteriemodul (4) und dem Schutzorgan (50), in die keine Schnellschalteinheit geschaltet ist, eine Kompensationseinheit (51) zur Kompensation der Strom/Spannungs-Charakteristik einer Schnellschalteinheit (12, 32, 67) geschaltet ist.

16. Gleichstrominselnetz (3, 60) nach Anspruch 15,
**dadurch gekennzeichnet, dass** die Kompensationseinheit (51) eine Parallelschaltung (52) aus einer den Ladestrom des Batteriemoduls (4a) durchlassend gepolten Diode (53) und einer den Entladestrom durchlassend gepolten Diode (54) umfasst.

17. Gleichstrominselnetz (3, 60) nach einem der Ansprüche 14 bis 16,
**dadurch gekennzeichnet, dass** die Schnellschalteinheiten (12, 32, 67) nach einer durch Kurzschlussströme verursachten Trennung der Batteriemodule (4) von dem Netz (3) die Spannung des Netzes (3) erfassen und nach Spannungswiederkehr die Batteriemodule (4) automatisch wieder dem Netz (3) zuschalten.

## Claims

1. High-speed switching device (1) for a high-power battery (2) in a stand-alone direct-current power supply system (3), in particular a submarine direct-current power supply system, wherein the high-power battery (2) has a plurality of parallel-connected battery modules (4) each having one section or a plurality of parallel-connected sections (5) of series-connected high-power battery cells (6), wherein the section or each of the sections (5) is at the same power supply system voltage as the stand-alone direct-current power supply system (2), wherein the high-speed switching device (1) has a plurality of high-speed switching units (12) which are connected in connecting conductors (7) of the battery modules (4) to the stand-alone direct-current power supply system (2), **characterized in that**
the high-speed switching units (12) each comprise a diode (9), which is forward-biased for the charging current of the battery module (4), and a power semiconductor switch (10), which is connected such that the discharge current passes through it, connected (8) in parallel,
- wherein the switching state of the power semiconductor switch (10) can be controlled by a monitoring and control device (11), and
- wherein the monitoring and control device (11) is designed such that it interrupts the discharge current flowing in the connecting conductor (7) by switching the power semiconductor switch (10) to a switched-off state, in order to switch off a discharge current from the battery module (4) in the connecting conductor (7).

2. High-speed switching device (1) according to Claim 1, **characterized in that** the monitoring and control device (11) is designed such that it quickly detects a short-circuit current in the connecting conductor (7), and interrupts the short-circuit current by switching the power semiconductor switch (10) to a switched-off state.

3. High-speed switching device (1) according to Claim 1 or 2, **characterized by** a diode (13), which is connected in parallel with the parallel circuit (8), is arranged in a conductor path (19) and connects a connecting conductor (7), which is connected to the positive pole of the battery module (4), and a connecting conductor (14), which is connected to the negative pole of the battery module (4).

4. High-speed switching device (1) for a high-power battery (2) in a stand-alone direct-current power supply system (3), in particular a submarine direct-current power supply system, wherein the high-power battery (2) has a plurality of parallel-connected battery modules (4) each having one section or a plurality of parallel-connected sections (5) of series-connected high-power battery cells (6), wherein the section or each of the sections (5) is at the same power supply system voltage as the stand-alone direct-current power supply system (2), wherein the high-speed switching device (1) has a plurality of high-speed switching units (32) which are connected in connecting conductors (7) of the battery modules (4) to the stand-alone direct-current power supply system (2), **characterized in that**
the high-speed switching units each have a parallel circuit (28) comprising a mechanical switch (29), through which the charging current and the discharge current of the battery module (4) pass, and at least one power semiconductor switch (30), which is connected such that the discharge current passes through it,
- wherein the switching states of the mechanical switch (29) and of the power semiconductor switch (30) can be controlled by a monitoring and control device (31), and
- wherein the monitoring and control device (31) is designed such that it commutates a current flowing through the mechanical switch onto the semiconductor switch (30) by opening the mechanical switch (29) in order to switch off a discharge current in the connecting conductor (7), and then interrupts the discharge current flowing in the connecting conductor by switching the semiconductor switch (30) to the switched-off state.

5. High-speed switching device (1) according to Claim 4, **characterized in that** the monitoring and control device (31) is designed such that it quickly detects a short-circuit current in the connecting conductor (7), and interrupts the short-circuit current by switching the power semiconductor switch (30) to a switched-off state.

6. High-speed switching device (1) according to Claim 4 or 5, **characterized in that** the semiconductor switch (30) is in a switched-on state when the mechanical switch (29) is opened.

7. High-speed switching device (1) according to Claim 4 or 5, **characterized in that** the semiconductor switch (30) is in a switched-off state when the mechanical switch (29) is opened, and the monitoring and control device (31) is designed such that it switches the semiconductor switch (30) to a switched-on state when the mechanical switch (29) is opened.

8. High-speed switching device (1) according to one of Claims 4 to 7, **characterized in that** the mechanical switch (29) is in the form of a vacuum switch.

9. High-speed switching device (1) according to one of Claims 4 to 8, **characterized by** an electrical resistor, which is connected in parallel with the semiconductor switch (30), preferably a varistor (34), for absorbing electrical energy and for limiting overvoltages which occur on the semiconductor switch (30), after the semiconductor switch (30) has been switched to the switched-off state.

10. High-speed switching device (1) according to one of the preceding claims, **characterized in that** each of the battery modules (4) in each case has only a single section (5) of series-connected high-power energy-storage battery cells (6).

11. High-speed switching device (1) according to one of the preceding claims, **characterized in that** the connecting conductor (7) connects the positive pole of the battery module (4) to the direct-current power supply system.

12. High-speed switching device (1) according to one of the preceding claims, **characterized in that** a mechanical switch (15 or 25), in particular an isolating switch, is respectively arranged in a connecting conductor (7) which connects the positive pole of the battery module (4) to the direct-current power supply system (3), and in a connecting conductor (14) which connects the negative pole of the battery module (4) to the direct-current power supply system (3).

13. High-speed switching device (1) according to one of the preceding claims, **characterized in that** the battery cells (6) consist of lithium-ion battery cells, lithium-polymer battery cells, lithium-iron-phosphate battery cells, lithium-titanate battery cells or combinations thereof.

14. Stand-alone direct-current power supply system (3, 60), in particular a submarine direct-current power supply system, comprising
- an electrical load (M),
- a high-power battery (2) for supplying electrical power to the electrical load, wherein the high-power battery has a plurality of parallel-connected battery modules (4, 4a) each having one section (5) or a plurality of parallel-connected sections (5) of series-connected high-power battery cells (6), wherein the or each of the sections (5) is at the same power supply system voltage as the stand-alone direct-current power supply system (3),
- a protection member (50), which is connected between the electrical load (M) and the high-power battery (1), for the load (M), in particular a fuse,
**characterized by**
- a high-speed switching device (1) according to one of the preceding claims, having high-speed switching units (12, 32, 67) for interruption of short-circuit currents in the battery modules (4), wherein the high-speed switching units are connected between the battery modules (4) and the protection member (50), and wherein no high-speed switching unit (12, 32, 67) is connected between at least one of the battery modules (4a) and the protection member (50).

15. Stand-alone direct-current power supply system (3, 60) according to Claim 14, **characterized in that** a compensation unit (51) for compensating for the current/voltage characteristic of a high-speed switching unit (12, 32, 67) is connected in the electrical connection between the at least one battery module (4) and the protection member (50), in which electrical connection no high-speed switching unit is connected, in order to discharge all the battery modules (4, 4a) uniformly.

16. Stand-alone direct-current power supply system (3, 60) according to Claim 15, **characterized in that** the compensation unit (51) has a parallel circuit (52) comprising a diode (53) which is forward-biased for the charging current of the battery module (4a), and a diode (54) which is forward-biased for the discharge current.

17. Stand-alone direct-current power supply system (3, 60) according to one of Claims 14 to 16, **characterized in that** the high-speed switching units (12, 32, 67) detect the voltage in the power supply system (3) after the battery modules (4) have been disconnected from the power supply system (3) as a result of short-circuit currents, and automatically reconnect the battery modules (4) to the power supply system (3) after the voltage returns.

## Revendications

1. Disjoncteur (1) rapide pour une batterie (2) à grande puissance dans un réseau (3) autonome de courant continu, notamment un réseau de courant continu de sous-marin, dans lequel la batterie (2) de grande puissance comprend plusieurs modules (4) de batterie montés en parallèle, ayant chacun une ligne (5) ou plusieurs lignes (5) montées en parallèle d'éléments (6) de batterie de grande puissance montés en série, là où chaque ligne (5), ayant la tension du réseau (2) autonome de courant continu, le disjoncteur (1) rapide ayant plusieurs unités (12) de disjonction rapide, qui sont montées dans des conducteurs (7) de connexion des modules (4) de batterie allant au réseau (2) autonome de courant continu,
**caractérisé en ce que**
les unités (12) de disjonction rapide comprennent chacune un circuit (8) parallèle composé d'une diode (9) polarisée, de manière à laisser passer le courant de charge du module (4) de batterie, et un interrupteur (10) à semi-conducteur de puissance, polarisé de manière à laisser passer le courant de décharge,
- dans lequel l'état de commutation de l'interrupteur (10) à semi-conducteur de puissance peut être commandé par un dispositif (11) de contrôle et de commande et
- dans lequel le dispositif (11) de contrôle et de commande est constitué de manière à ce qu'il interrompe, pour couper un courant de décharge du module (4) de la batterie dans le conducteur (7) de connexion, le courant de décharge passant dans le conducteur (7) de connexion, par mise de l'interrupteur (10) à semi-conducteur de puissance dans un état non passant.

2. Disjoncteur (1) rapide suivant la revendication 1, **caractérisé en ce que** le dispositif (11) de contrôle et de commande est constitué de manière à détecter rapidement un courant de court-circuit dans le conducteur (7) de connexion et à interrompre le courant de court-circuit, par mise de l'interrupteur (10) à semi-conducteur de puissance dans un état non passant.

3. Disjoncteur (1) rapide suivant la revendication 1 ou 2, **caractérisé par** une diode (13), qui est montée en parallèle au circuit (8) parallèle et qui est montée dans un trajet (19) conducteur, qui relie un conducteur (7) de connexion, relié au pôle positif du module (4) de batterie, et un conducteur (14) de connexion, relié au pôle négatif du module (4) de batterie.

4. Disjoncteur (1) rapide pour une batterie (2) à grande puissance dans un réseau (3) autonome de courant continu, notamment un réseau de courant continu de sous-marin, dans lequel la batterie (2) de grande puissance comprend plusieurs modules (4) de batterie montés en parallèle, ayant chacun une ligne (5) ou plusieurs lignes (5) montées en parallèle d'éléments (6) de batterie de grande puissance montés en série, là où chaque ligne (5), ayant la tension du réseau (2) autonome de courant continu, le disjoncteur (1) rapide ayant plusieurs unités (12) de disjonction rapide, qui sont montées dans des conducteurs (7) de connexion des modules (4) de batterie allant au réseau (2) autonome de courant continu,
**caractérisé en ce que**
les unités de disjonction rapide comprennent chacune un circuit (28) parallèle composé d'un interrupteur (29) mécanique, laissant passer le courant de charge et le courant de décharge du module (4) de batterie, et au moins un interrupteur (30) à semi-conducteur de puissance, polarisé de manière à laisser passer le courant de décharge,
- dans lequel les états de commutation de l'interrupteur (29) mécanique et de l'interrupteur (30) à semi-conducteur de puissance peuvent être commandés par un dispositif (31) de contrôle et de commande et
- dans lequel le dispositif (31) de contrôle et de commande est constitué de manière à ce que, pour couper un courant de décharge dans le conducteur (7) de connexion par ouverture de l'interrupteur (29) mécanique, il commute un courant passant dans l'interrupteur mécanique sur l'interrupteur (30) à semi-conducteur et ensuite, par mise de l'interrupteur (30) à semi-conducteur dans un état non passant, il interrompe le courant de décharge passant dans le conducteur de connexion.

5. Disjoncteur (1) rapide suivant la revendication 4,
**caractérisé en ce que** le dispositif (31) de contrôle et de commande est constitué de manière à détecter rapidement un courant de court-circuit dans le conducteur (7) de connexion et à interrompre le courant de court-circuit en mettant l'interrupteur (30) à semi-conducteur de puissance dans un état non passant.

6. Disjoncteur (1) rapide suivant la revendication 4 ou 5,
**caractérisé en ce que** l'interrupteur (30) à semi-conducteur est dans un état passant à l'ouverture de l'interrupteur (29) mécanique.

7. Disjoncteur (1) rapide suivant la revendication 4 ou 5,
**caractérisé en ce que** l'interrupteur (30) à semi-conducteur est dans un état non passant à l'ouverture de l'interrupteur (29) mécanique et le dispositif (31) de contrôle et de commande est constitué de manière à mettre l'interrupteur (30) à semi-conducteur dans un état passant par l'ouverture de l'interrupteur (29) mécanique.

8. Disjoncteur (1) rapide suivant l'une des revendications 4 à 7,
**caractérisé en ce que** l'interrupteur (29) mécanique est constitué sous la forme d'un interrupteur à vide.

9. Disjoncteur (1) rapide suivant l'une des revendications 4 à 8,
**caractérisé par** une résistance électrique montée en parallèle à l'interrupteur (30) à semi-conducteur, de préférence une varistance (34), d'absorption d'énergie électrique et de limitation de surtensions, qui apparaissent, sur l'interrupteur (30) à semi-conducteur, après la mise de l'interrupteur (30) à semi-conducteur dans l'état non passant.

10. Disjoncteur (1) rapide suivant l'une des revendications précédentes,
**caractérisé en ce que** chacun des modules (4) de batterie ne comprend qu'une ligne (5) unique d'éléments (6) de batterie d'accumulateur d'énergie à grande puissance montés en série.

11. Disjoncteur (1) rapide suivant l'une des revendications précédentes,
**caractérisé en ce que** le conducteur (7) de connexion relie le pôle positif du module (4) de batterie au réseau de courant continu.

12. Disjoncteur (1) rapide suivant l'une des revendications précédentes,
**caractérisé en ce que**, dans un conducteur (7) de connexion, qui relie le pôle positif du module (4) de batterie au réseau (3) de courant continu et, dans un conducteur (14) de connexion, qui relie le pôle négatif du module (4) de batterie au réseau (3) de courant continu, est monté respectivement un interrupteur (15 ou 25) mécanique, notamment un sectionneur.

13. Disjoncteur (1) rapide suivant l'une des revendications précédentes,
**caractérisé en ce que** les éléments (6) de batterie sont constitués d'éléments de batterie Li-ion, d'éléments de batterie Li-polymère, d'éléments de batterie Li-fer-phosphate, d'éléments de batterie Li-titanate ou de leurs combinaisons.

14. Réseau (3, 60) autonome de courant continu, notamment réseau de courant continu de sous-marin, comprenant
- un consommateur (M) électrique,
- une batterie (2) de grande puissance pour alimenter le consommateur électrique en énergie électrique, la batterie de grande puissance et comprenant plusieurs modules (4, 4a) de batterie montés en parallèle, ayant chacun une ligne (5) ou plusieurs lignes (5) montées en parallèle d'éléments (6) de batterie de grande puissance montés en série, là où chaque ligne (5) ayant la tension du réseau (3) autonome de courant continu,
- un organe (50) de protection du consommateur (M), notamment un coupe-circuit, monté entre le consommateur (M) électrique et la batterie (1) de grande puissance, **caractérisé par**
- un disjoncteur (1) rapide suivant l'une des revendications précédentes, ayant des unités (12, 32, 67) de disjonction pour interrompre des courants de court-circuit des modules (4) de batterie, les unités de disjonction étant montées entre les modules (4) de batterie et l'organe (50) de protection, dans lequel une unité (12, 32, 67) de disjonction rapide n'est pas montée entre au moins l'un des modules (4a) de batterie et l'organe (50) de protection.

15. Réseau (3, 60) autonome de courant continu suivant la revendication 14,
**caractérisé en ce que**, pour uniformiser la décharge de tous les modules (4, 4a) de batterie, il est monté dans la liaison électrique, entre le au moins un module (4) de batterie et l'organe (50) de protection, dans laquelle il n'est pas montée d'unité de disjonction rapide, une unité (51) de compensation pour la compensation de la caractéristique courant/tension d'une unité (12, 32, 67) de disjonction rapide.

16. Réseau (3, 60) autonome de courant continu suivant la revendication 15,
**caractérisé en ce que** l'unité (51) de compensation comprend un circuit (52) en parallèle, composé d'une diode (53), polarisée de manière à laisser passer le courant de charge du module (4a) de batterie, et d'une diode (54), polarisée de manière à laisser passer le courant de décharge.

17. Réseau (3, 60) autonome de courant continu suivant l'une des revendications 14 à 16,
**caractérisé en ce que** les unités (12, 32, 67) de disjonction rapide détectent la tension du réseau (3) après une séparation, provoquée par des courants de court-circuit, des modules (4) de batterie du réseau (3) et, après retour de la tension, reconnectent les modules (4) de batterie au réseau (3).
